(19) Europäisches Patentamt
European Patent Office
Office européen des brevets

(11) Publication number: 0 229 891 A2

# (12) EUROPEAN PATENT APPLICATION

(21) Application number: 86114617.3

(22) Date of filing: 22.10.86

(51) Int. Cl.[4]: G 11 B 5/55, G 11 B 5/596

(30) Priority: 22.10.85 JP 234544/85
17.02.86 JP 30709/86

(43) Date of publication of application: 29.07.87 Bulletin 87/31

(84) Designated Contracting States: DE FR GB NL

(71) Applicant: NEC CORPORATION, 33-1, Shiba 5-chome, Minato-ku, Tokyo 108 (JP)

(72) Inventor: Tsujisawa, Takahiko c/o NEC Corporation, 33-1, Shiba 5-chome Minato-ku, Tokyo (JP)

(74) Representative: Vossius & Partner, Siebertstrasse 4 P.O. Box 86 07 67, D-8000 München 86 (DE)

## (54) Head positioning system for floppy disk drives.

(57) The head positioning system for positioning a magnetic head at a target track of a rotating magnetic disk comprises a drive motor for driving said magnetic head in a radial direction of said magnetic disk, and a position error detector for generating a position error signal which indicates a deflection of said magnetic head with respect to a center line of said target track. A compensation digital filter generates a compensation signal having a frequency integer times the disk rotational frequency. A stabilization digital filter is connected to said position error detector and said compensation digital filter for generating a equilibrium point signal of said drive motor in accordance with said position error signal and said compensation signal. A motor driver determines a drive current of said drive motor in response to said equilibrium point signal. A detector detects a position of said magnetic head relative to said center line of said target track and supplies the head position signal to said position error detector. This system positions the magnetic head at the center line of a target track with high accuracy even if the target track is eccentric. Furthermore, the track density of the disk can be increased.

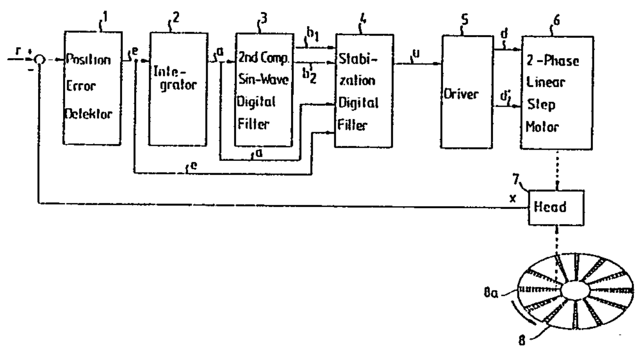


EP 0 229 891 A2

VOSSIUS & PARTNER

PATENTANWÄLTE

EUROPEAN PATENT ATTORNEYS

0229891



Dr. VOLKER VOSSIUS, Dipl.-Chem.
DOROTHEA VOSSIUS, Dipl.-Chem.
Dr. PAUL TAUCHNER, Dipl.-Chem.
Dr. DIETER HEUNEMANN, Dipl.-Phys.
Dr. PETER RAUH, Dipl.-Chem.
Dr. GERHARD HERMANN, Dipl.-Phys.

SIEBERTSTRASSE 4
P.O. BOX 860767
8000 MÜNCHEN 86
PHONE: (089) 474075
CABLE: BENZOLPATENT MÜNCHEN
TELEX: 529453 VOPAT D
TELEFAX: (089) 472001 (GR. II + III)

Our Ref.: U 971 EP
EP 86 11 4617.3
NEC Corporation

Neu eingereicht / Newly filed
Nouvellement déposé

February 13, 1987

HEAD POSITIONING SYSTEM FOR FLOPPY DISK DRIVES

BACKGROUND OF THE INVENTION

The present invention relates to a head positioning system which drives a magnetic head from a current track to a target in the radial direction of a magnetic disk. More particularly, the present invention relates to a head positioning system for floppy disk drives employing a closed loop servo control for positioning the magnetic head.

In a conventional floppy disk drive, the magnetic head is driven to a target track of the floppy disk by an open-loop controlled step motor. For this reason, the track width is determined by the drive pitch of the step motor and is relatively wide enough to neglect a track eccentricity. The track eccentricity includes a first component caused by disk exchange, which has the same frequency as that of the disk rotation, and a second component caused by environment change, such as temperature change and humidity change, which has twice the frequency of the disk rotation.

In order to increase a record capacity of the floppy disk, a track density is required to increase, i.e. the track width should be reduced. However, the open loop head positioning system cannot realize a drastic reduction in the track width since the reduction of the drive pitch of the step motor is mechanically limited and the track eccentricity cannot be negligible in the high track density.

Neu eingereicht / Newly filed
Nouvellement déposé

A head positioning system employing the closed loop servo for the floppy disk drive is proposed in Japanese Patent Disclosure No. 58-151613. In this system, each of a plurality of tracks is divided into a plurality of sectors. The servo information is recorded at the leading portion of each of the sectors. A magnetic head reads the servo information to supply it to a closed loop servo controller. The controller enables a fine step motor to move the magnetic head in the radial direction of the disk to position near the center line of a target track in accordance with the servo information. The fine step motor moves the magnetic head by a pitch narrower than the track width every time the servo information is obtained. Thus, the fine track following operation is carried out by using only the servo information obtained from the leading portion of each of the sectors.

The sampling time of the servo information is determined by the disk rotation speed and the number of sectors; both of which is predetermined. Accordingly, the sampling time cannot be shortened and is too long to make the magnetic head follow the second component of the track eccentricity with high accuracy. As a result, the conventional head positioning system cannot accurately position the magnetic head at the center line of the target track so that the track density is relatively low.

## SUMMARY OF THE INVENTION

Therefore, an object of the present invention is to provide a head positioning system capable of positioning the magnetic head at the center line of a target track with high accuracy even; if the target track is eccentric.

Another object of the present invention is to provide a head positioning system capable of increasing the track density of the disk.

A head positioning system according to the present invention is featured by having a compensation digital filter for generating a compensation signal whose frequency is synchronized with the track eccentricity.

## BRIEF DESCRIPTION OF THE DRAWINGS

Fig. 1 is a block diagram of a head positioning system according to a first embodiment of the present invention;
Fig. 2 is a block diagram of a motor driver used in the head positioning system shown in Fig. 1;
Fig. 3 shows a relationship between the equilibrium position and the static torque of a step motor;
Fig. 4 is a circuit diagram of a low pass filter used in the motor driver shown in Fig. 2;
Fig. 5 is a block diagram of a controlled object shown in Fig. 1;
Fig. 6 is a block diagram showing a transfer function of an integrater used in the head positioning system shown in Fig. 1;
Fig. 7 is a block diagram showing a transfer function of a second component sine-wave digital filter used in the head positioning system shown in Fig. 1;
Fig. 8 is a block diagram showing a transfer function of a stabilization digital filter used in the head positioning system shown in Fig. 1;
Fig. 9 is a block diagram of a head positioning system according to a second embodiment of the present invention;
Fig. 10 is a block diagram of a compensation digital filter used in the head positioning system shown in Fig. 9; and
Fig. 11 is a block diagram showing a transfer function of a stabilization digital filter used in the head positioning system shown in Fig. 9.

## DESCRIPTION OF THE PREFERRED EMBODIMENTS

Fig. 1 shows a head positioning system according to a first embodiment of the present invention. A position error detector I is provided with a reference signal r and a head position signal x to generate a position error signal e. The reference signal r represents a target track on which a magnetic head 7 is to be positioned. The head position signal x obtained from a magnetic head 7 which reads a servo information from servo areas 8a of a floppy disk 8. A record area of the floppy disk 8 is divided into 32 sectors each having the servo area 8a at its leading portion. A disk rotation speed of the disk 8 is set at 300 $min^{-1}$ (5 Hz). Accordingly, the head position signal x is obtained every sampling time T (=6.25 msec). The position error detector I generates the position error signal e, which represents a difference between the reference signal r and the head position signal x, and supplies the signal e to an integrator 2 and a stabilization digital filter 4 every sampling time T.

The integrator 2 integrates the error signal e every sampling time T to generate an integrated value a. The integrated value a is supplied to a second component sine-wave digital filter 3 and the stabilization digital filter 4.

The sine-wave digital filter 3 generates a sine-wave whose frequency is the same as the second component of the track eccentricity. As described previously, the second component is caused by temperature change, humidity change, and so on. In detail, the second component eccentricity means that the track is deformed to be oval. Accordingly, the second component has a frequency twice the disk rotation frequency. Since the disk rotation frequency is set at 5 Hz, the digital filter generates a sine-wave of 10 Hz. The sine-wave generation is triggered by an impulse input.

The stabilization digital filter 4 calculates an equilibrium point u in accordance with the error signal e, the integrated value a and the outputs $b_1$ and $b_2$ of the digital filter 3. The calculating time period for the equilibrium point u is set at constant value $\Delta$ (=0.5 msec). Then the stabilization digital filter 4 supplies the equilibrium point u to a motor driver 5 during the period equal to the sampling interval T. The stabilization digital filter 4 is a phase-compensator for stabilizing the feedback control system, as known in the art.

The motor driver 5 supplies drive currents d and d' to each phases of a 2-phase linear step motor 6 in correspondence to the equilibrium point u. As is well known, an appropriate combination of the 2-phase motor currents can stop the step motor at an arbitrary position. The motor driver 5 thus moves the motor 6 to position the magnetic head 7 at a target track.

The magnetic head 7 reads the servo information from the servo area 8a at the next sampling time T. The updated head position signal x is supplied to the position error detector I.

Fig. 2 shows a block diagram of the motor driver 5 which includes ROM's 51 and 51' for storing current values f and f' to be applied to the two phases of the motor 6. Appropriate current values f and f' are read out corresponding to the equilibrium point u. The current values f and f' in the digital form are converted into the analog form by digital to analog (D/A) converters 52 and 52'. Low pass filters (LPF) 53 and 53' cut off the higher frequencies than the Nyquist rate of the output signals g and g' of the D/A converters 52 and 52'. Amplifiers 54 and 54' amplify the output signals h and h' of the LPFs 53 and 53' to generate the drive currents d and d'.

The current values f and f' are determined by the following manner. Referring to Fig. 3, the reference position 0 is determined at the equilibrium point where the drive current of +0.1 A is applied to both two phases of the step motor 6. In this state, the maximum static torque of the step motor 6 is determined as a reference static torque. The other equilibrium points u, u' and u'' are defined by the distance from the reference position 0. The current values f and f' are determined in correspondence with the equlibrium points u, u' and u'' such that the maximum static

Neu eingereicht / Newly filed
Nouvellement déposé

torque of the step motor 6 takes the reference static torque by the combination of the values f and f'. For instance, the current value f is set from +0.1 to 0 ampere and f' is set from +0.1 to $+(0.1 \times \sqrt{2})$ ampere corresponding to the equlibrium point from the reference point 0 to $8/\lambda$, respectively, wherein $\lambda$ is tooth pitch of the step motor.

Fig. 4 shows a circuit diagram of the LPF 53 shown in Fig. 2. The other LPF 53' is the same as the LPF 53. The LPF 53 includes resistors $R_1$ and $R_2$, condensors $C_1$ and $C_2$ and a differential amplifier 531, as is well known in the art. The LPF 53 is represented by 2-order transfer function $G_{1p}$ (s) as follows:

$$G_{1p}(s) = \frac{\omega_0^2}{s^2 + 2\zeta\omega + \omega_0^2} \qquad \ldots(1)$$

$$\omega_0 = 1/\sqrt{C_1 \cdot C_2 \cdot R_1 \cdot R_2} \qquad \ldots(2)$$

$$\zeta = \frac{C_2 \cdot (R_1+R_2)}{2 \cdot \sqrt{C_1 \cdot C_2 \cdot R_1 \cdot R_2}} \qquad \ldots(3)$$

wherein s represents an operator of the Laplace transform. Referring to Fig. 5, the relationship between the equilibrium point u and the head position (= step motor position) x are as follows:

$$M\frac{d^2x}{dt^2} + kx = ku \qquad \ldots(4)$$

$$k = \frac{F\pi}{2\lambda} \qquad \ldots(5)$$

wherein M represents a mass driver by the step motor 6 and F represents the maximum static torque of the step motor 6.

In Fig. 5, the equilibrium point u is represented by the

Neu eingereicht / Newly filed
Nouvellement déposé

calculating result $\underline{v}$ and the calculating time $\Delta$. The discrete state equations for the system shown in Fig. 5 are as follows:

$$X((N+1)T) = A \cdot X(NT) + B \cdot v(NT) \quad \ldots (6\text{-a})$$

$$Y(NT) = C \cdot X(NT) \quad \ldots (6\text{-b})$$

$$(N = 0, 1, 2 \ldots)$$

In the equations (6-a) and (6-b), coefficient matrixes A, B and C are as follows:

$$A = \begin{bmatrix} \exp(\Phi T) & , & \exp(\Phi(T-\Delta)) \int_0^{\Delta} \exp(\Phi \tau) d\tau \cdot \Lambda \\ 0 & , & 0 \end{bmatrix}$$

$$B = \begin{bmatrix} \int_0^{T-\Delta} \exp(\Phi \tau) d\tau \cdot \Lambda \\ 1 \end{bmatrix}$$

$$C = \begin{bmatrix} 1 & 0 & 0 \\ 0 & 0 & 1 \end{bmatrix}$$

wherein

$$\Phi = \begin{bmatrix} 0 & 1 \\ -k/M & 0 \end{bmatrix}$$

$$\Lambda = \begin{bmatrix} 0 \\ k/M \end{bmatrix}$$

Further, state vector X(NT) and output vector Y(NT) are represented as follows:

$$X(NT) = [x(NT), \beta(NT), u(NT)]^T$$

$$Y(NT) = [x(NT), u(NT)]^T$$

wherein ß represents a velocity of the magnetic head 7. As apparently in the art, the system represented by the equations (6-a) and (6-b) is controllable and observable with the observability indices "2".

Fig. 6 illustrates the function of the integrator 2 by using an operator z of the Z-transform. The integrator 2 includes an adder 21 and a shift register 22. The shift register 22 integrates the output of the adder 21 and outputs the integrated value <u>a</u> every sampling time T.

Fig. 7 is a block diagram representing a transfer function of the second component sine-wave digital filter 3 by using an operator of Z-transform. The sine-wave digital filter 3 is provided for enabling the magnetic head to follow the second component of the track eccentricity even if the sampling frequency is relatively low.

In Fig. 7, the pulse transfer function G sin(z) from the integrated value a to the output b, is represented by real constants m1, m2, m3, m4, m5 and m6 as follows:

$$G_sin(z) = \frac{m/z - m1 \cdot m4 + m2 \cdot m3}{z^2 - (m4+m5)\,z + m4 \cdot m5 - m3m6} \qquad \ldots\ldots(7)$$

In this embodiment, since the frequency of the second component of the track eccentricity is 10 Hz, real constants m1 to m6 are determined as follows by discreating the formula $\frac{1}{S^2 + 3948}$, which is obtained from $\frac{1}{(20\pi)^2} \sin(20\pi \cdot t)$ by Laplace transform, with the sampling time T (= 6.25 msec).

$m1 = 1.9282 \times 10^{-5}$ $\qquad$ $m2 = 6.0906 \times 10^{-3}$

Neu eingereicht / Newly filed
Nouvellement déposé

$m3 = 6.0906 \times 10^{-3}$  $m4 = 0.92388$
$m5 = 0.92388$  $m6 = -24.046$

Referring again to Fig. 1, pulse transfer function W(z) from the reference signal r to the head position signal x for one cycle is represented as follows since it includes the pulse transfer function G sin(z) and that of the integrator (= 1/(z-1)):

$$W(z) = \frac{(z-1)\{z^2-(m4+m5)z + m4\cdot m5 - m3\cdot m6\}\gamma(z)}{\delta(z)} \quad \ldots (8)$$

wherein $\delta(z)$ and $\gamma(z)$ represent 0-order and (0-3)-order real coefficient polynomial whose solutions of $\delta(z)=0$ all exist at the unit circle of the z-plane.

According to the formula (8), final value theorem of Z-transform and the frequency of the second component of the track eccentricity, the position error e is represented as follows:

$$\lim_{t\to\infty} e(t)$$

$$= \lim_{z\to 1} (1-z^{-1})\cdot W(z) \frac{Kz}{z^2-(m4+m5)\cdot z+m4\cdot m5-m3\cdot m6}$$

$$= 0 \qquad (K = \text{real constant})$$

It appears that the magnetic head follows the center line of a target track, i.e., the track eccentricity, with high accuracy.

Fig. 8 is a block diagram representing a transfer function of the stabilization digital filter 4. As described above, since the system shown in Fig. 5 is controllable and observable and its observability indices is "2", the system can be stabilized by first order stabilization digital filter, as known in the art. In this case $\delta(z)$ in formula (8) is "7". In Fig. 8, real constants

Neu eingereicht / Newly filed
Nouvellement déposé

l1 to l9 are determined in accordance with the observer theory or the state feedback theory. The polynomial $\delta(z)$ in formula (8) is arbitrarily determined by the real constants l1 to l9. Accordingly, the system shown in Fig. 1 can be stabilized.

Fig. 9 shows a second embodiment of the present invention in which the same elements and signals in the figure bear the same reference numerals as in Fig. 1.

The position error signal e from the position error detector 1 is supplied to a compensation digital filter 9 and a stabilization digital filter 10. The compensation digital filter 9 has a plurality of outputs $i_1$ to $i_{32}$ which corresponds to the number of sectors. The stabilization digital filter 10 calculates the equilibrium point u and supplies it to the motor driver 5.

Referring to Fig. 10, the compensation digital filter 9 includes a plurality of shift registers 901 to 932. The number of the shift registers is the same as that of the sectors on the floppy disk 8, i.e., "32". The contents of the shift registers 901 to 932 are cyclically shifted to the next shift registers, respectively, in synchronization with the sampling timing T. The content of the shift register 932 is added to the position error signal e and stored in the shift register 901. Accordingly, the position error signal obtained the time 32T before and the current position error signal e is added and stored to the shift register 901.

Pulse transfer function $G_{zo}(z)$ from the position error signal e to the output i32 of the signal r to the position error signal e of the system shown in Fig. 9 is as follows:

$$G_{re}(z) = \frac{N_{re}(z)}{D_{re}(z)} \quad ..... \quad (10)$$

$$N_{re}(z) = (z^{32}-1)\ N_{re}'(z) \quad ..... \quad (11)$$

Neu eingereicht / Newly filed
Nouvellement déposé

wherein Dre (z) and N're (z) represents 36(4+32)-th order real coefficient polynomial of z whose solutions of Dre (z) = 0 all exist in the unit circle of the z-plane, and N're (z) represents 4-th order real coefficient polynomial of z. It is noted that $(z^{32}-1)$ is included in the denominator of the pulse transfer function $G_{re}(z)$.

The solutions of $(z^{32}-1=0)$ in the frequency(s) area are as follows:

$$z = e^{ST} \quad (T=1/320)$$

wherein 0 represents the disk rotation frequency.

Compensation digital filter 9 is represented as follows:

$$G_{ZO}(z) = \frac{1}{z^{32} - 1} \qquad \text{........(9)}$$

The outputs i1 to i32 of the shift registers 901 to 932 are supplied to the stabilization digital filter 10.

Fig. 11 is a block diagram representing a transfer function of the stabilization digital filter 10 by using the operator z of the z-transform. The controlled system, whose pulse transfer function is represented by equations (6-a), (6-b), and (9), is also controllable and observable, and its observability indices are "z". Therefore, the system can be stabilized by determining real constants $m_{001}$ to $m_{030}$, $m_{101}$ to $m_{133}$, $m_{f1}$ and $m_{f2}$ at appropriate values.

Pulse transfer function $G_{re}(z)$ from the reference. Accordingly,

$$e^{32ST} = 1$$

$$s = \pm jp \cdot 2\pi/32T$$

$$= \pm jp \cdot 2\pi \cdot 0 \qquad (p=0,1,\ldots,\ j^2=-1)$$

It appears that the position error signal does not include the frequency components of 0, 20, 30,.... That is, the magnetic head follows the track eccentricity.

In the first and second embodiments, the functions of the sine-wave digital filter 3, the compensation digital filter 9 and the stabilization digital filter 4 and 10 can be carried out by means of micro-processor by solving a difference equation.

As described above, the head positioning system according to the present invention can position the magnetic head at the center line of a target track with high accuracy. As a result, three times the track density can be achieved compared with that of a conventional floppy disk drive.

CLAIMS

1. A had positioning system for positioning a magnetic head at a target track of a magnetic disk which rotates at a disk rotational frequency, comprising a drive motor for driving said magnetic head in a radial direction of said magnetic disk, a position error detector for generating a position error signal which indicates a deflection of said magnetic head with respect to a center line of said target track, a compensation digital filter for generating a compensation signal having a frequency integer times said disk rotational frequency, a stabilization digital filter connected to said position error detector and said compensation digital filter for generating an equilibrium point signal of said drive motor in accordance with said position error signal and said compensation signal, a motor driver for determining a drive current of said drive motor in response to said equilibrium point signal, and means for detecting a position of said magnetic head relative to said center line of said target track and for supplying the head position signal to said position error detector.

2. The head positioning system as claimed in claim 1, wherein said compensation digital filter generates a sine-wave signal whose frequency is twice said disk rotational frequency.

3. The head positioning system as claimed in Claim 1 or 2, wherein said drive motor is two-phase step motor, said motor driver determining the drive current applied to each of phases of said step motor.

4. The head positioning system as claimed in any one of Claims 1 to 3, wherein said motor driver further includes memory means for storing the value of said drive current in correspondence with said equilibrium point signal.

Neu eingereicht / Newly filed
Nouvellement déposé

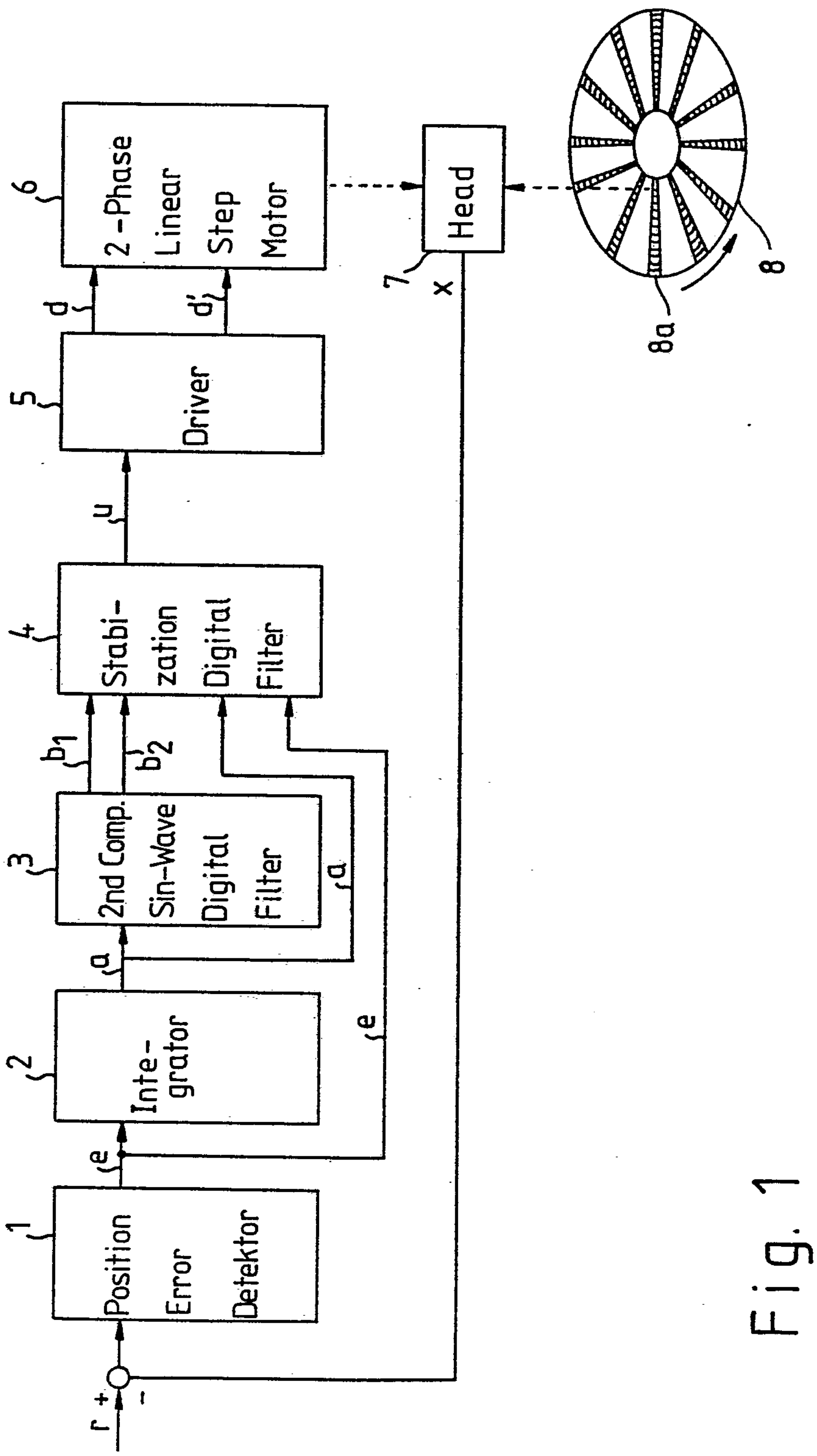


Fig. 1

Neu eingereicht / Newly filed
Nouvellement déposé

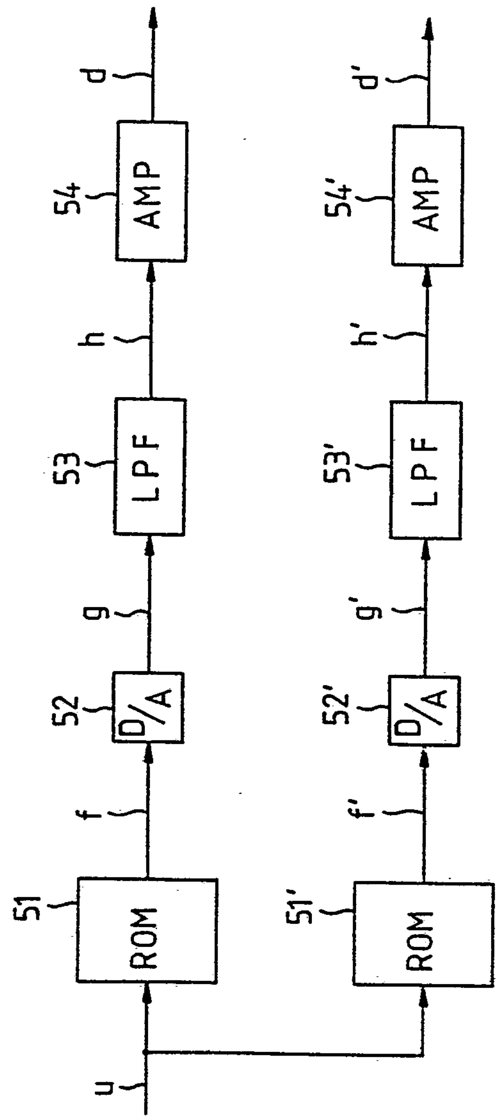


Fig. 2

Fig. 3

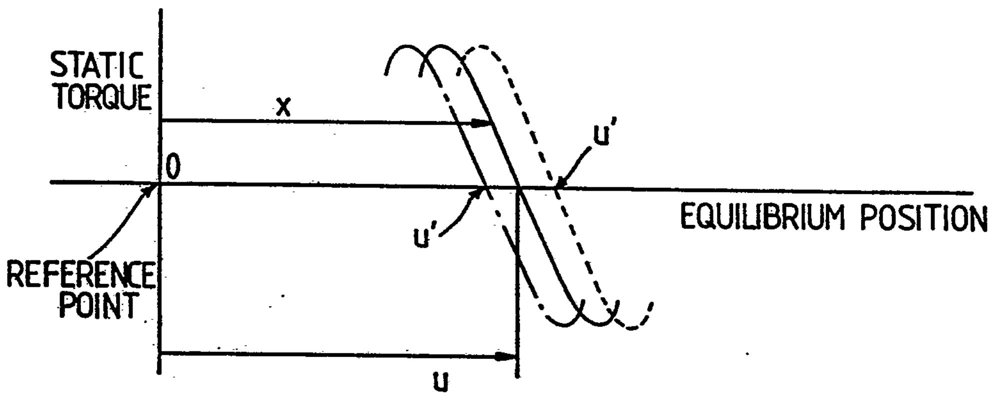
STATIC
TORQUE
x
0
u'
u'
EQUILIBRIUM POSITION
REFERENCE
POINT
u

Fig. 4

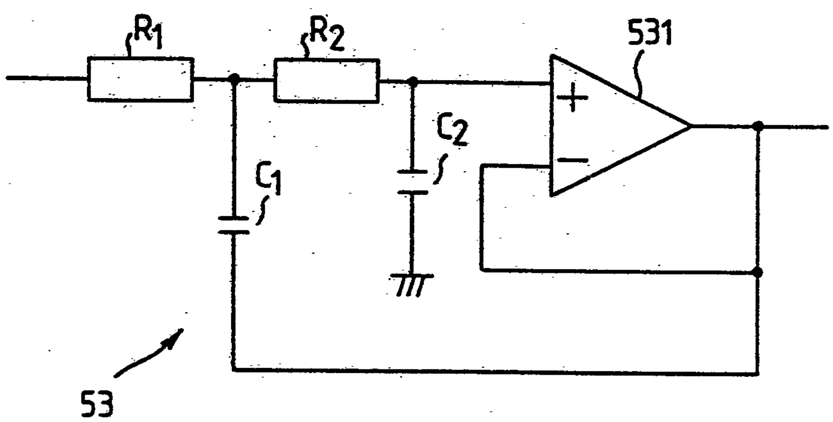
R1
R2
531
C2
C1
53

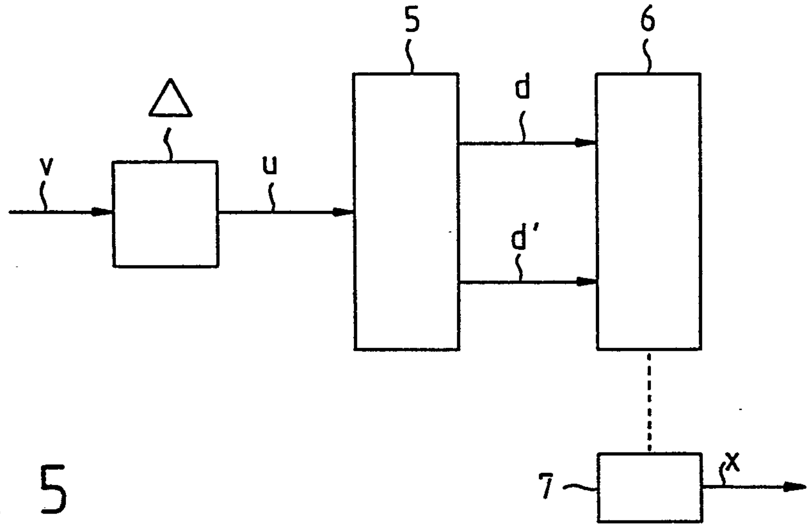


Fig. 5

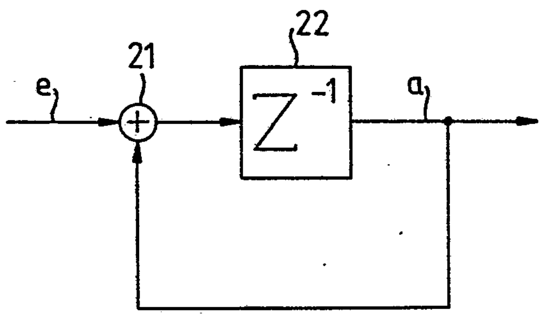


Fig. 6

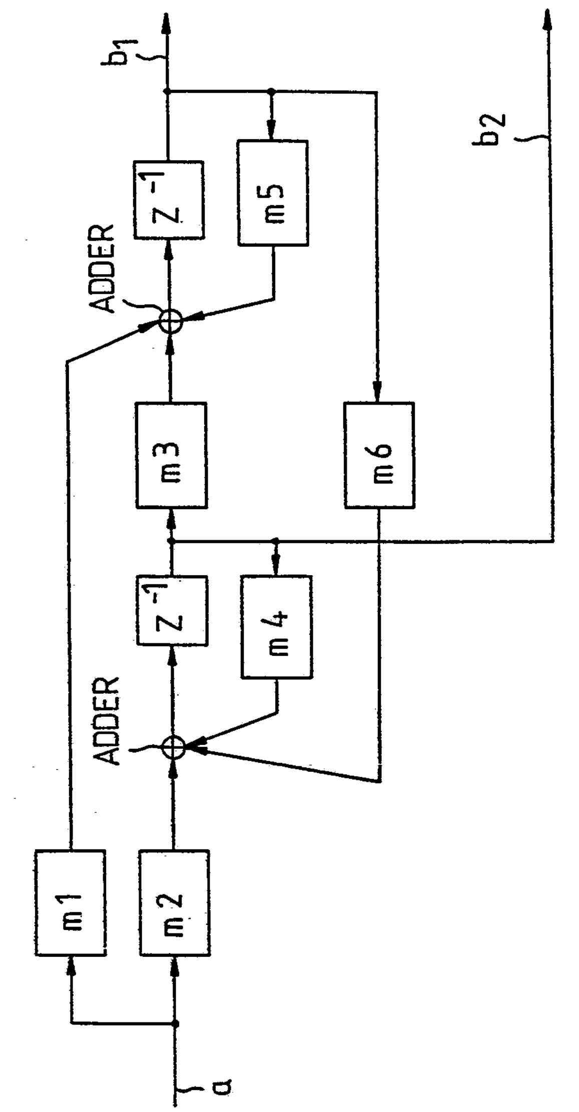


Fig. 7

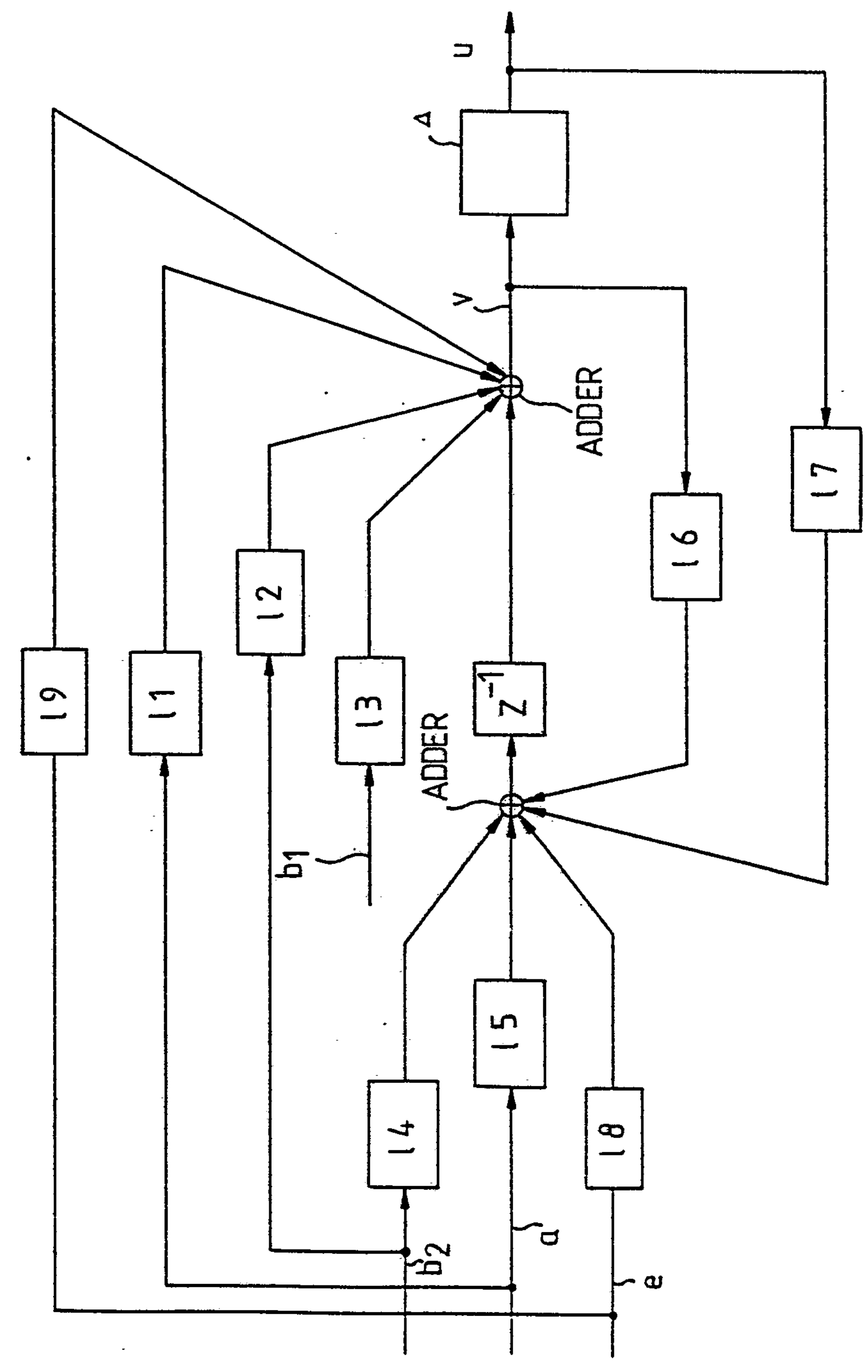


Fig. 8

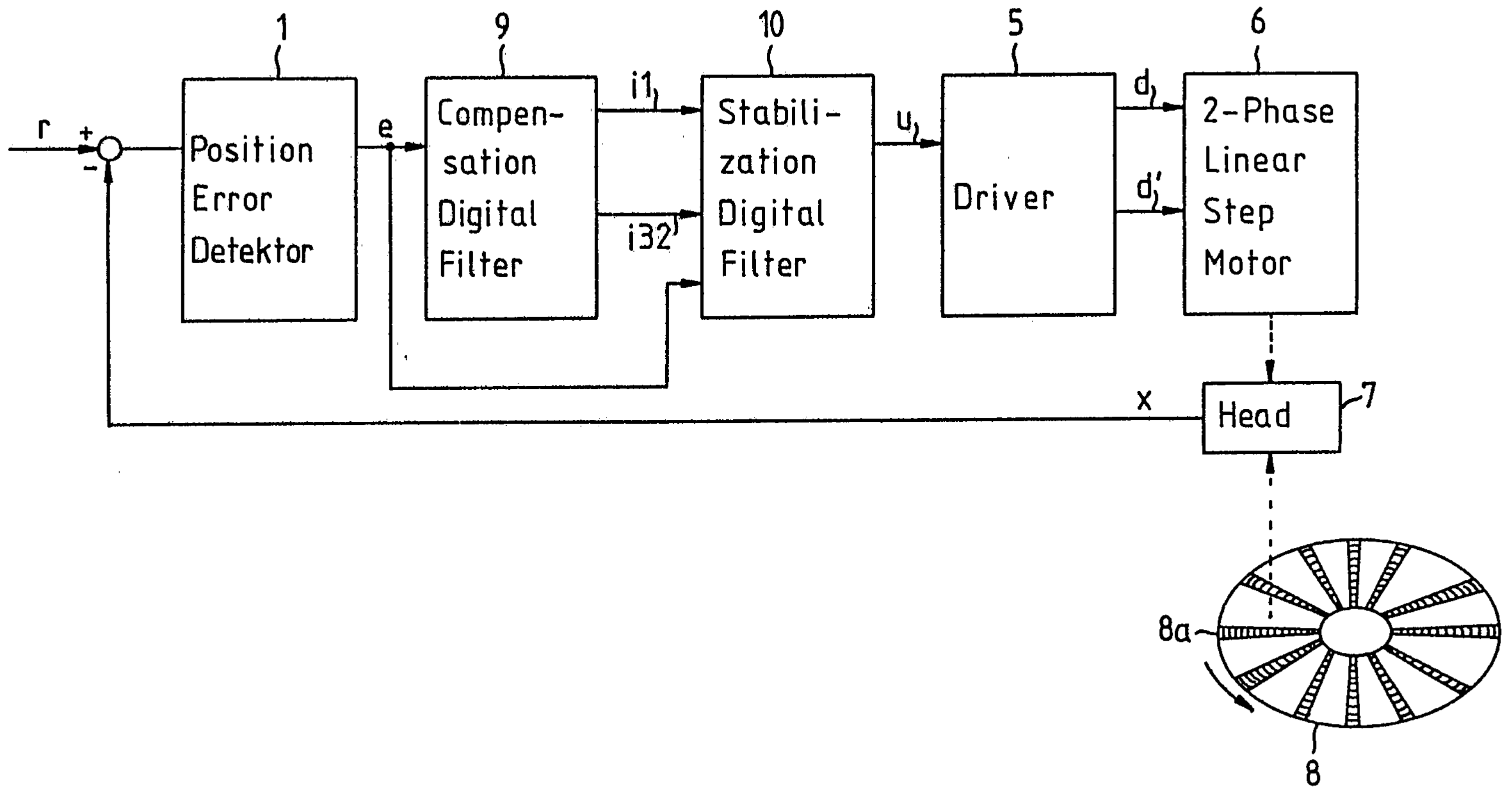
r
+
-
1
Position
Error
Detektor
e
9
Compen-
sation
Digital
Filter
i1
i32
10
Stabili-
zation
Digital
Filter
u
5
Driver
d
d'
6
2-Phase
Linear
Step
Motor
x
Head
7
8a
8

Fig. 9

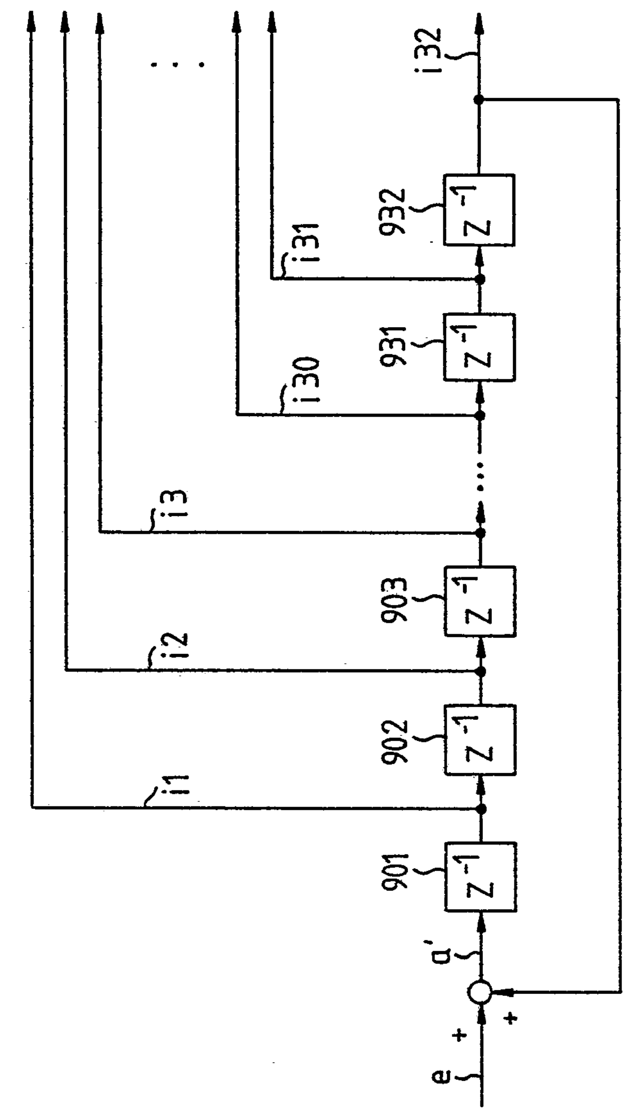


Fig. 10

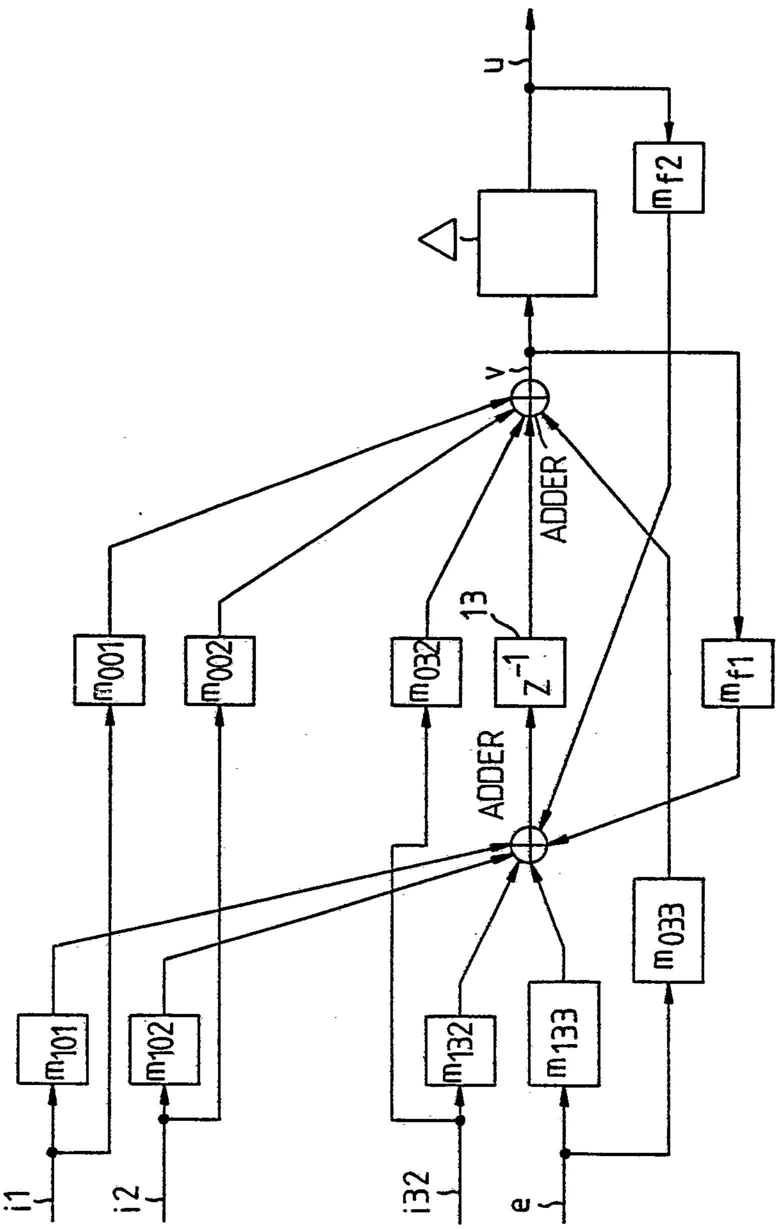
i1
i2
i32
e
m101
m102
m132
m133
m033
m001
m002
m032
z-1
13
mf1
mf2
ADDER
ADDER
v
u

Fig. 11